(19) Europäisches Patentamt

European Patent Office

Office européen des brevets

(11) Veröffentlichungsnummer: **0 258 770 B1**

(12) **EUROPÄISCHE PATENTSCHRIFT**

(45) Veröffentlichungstag der Patentschrift: **29.07.92**

(51) Int. Cl.⁵: **A47B** 47/03, F16B 12/28

(21) Anmeldenummer: **87112234.7**

(22) Anmeldetag: **24.08.87**

(54) **Möbelstück.**

(30) Priorität: **01.09.86 CH 503/86**

(43) Veröffentlichungstag der Anmeldung:
**09.03.88 Patentblatt 88/10**

(45) Bekanntmachung des Hinweises auf die
Patenterteilung:
**29.07.92 Patentblatt 92/31**

(84) Benannte Vertragsstaaten:
**AT DE ES FR GB IT NL**

(56) Entgegenhaltungen:
**CH-A- 511 003**
**CH-A- 594 166**
**DE-B- 1 260 094**
**DE-U- 8 613 474**
**US-A- 2 806 755**

(73) Patentinhaber: **Abnox AG**
**Zugerstrasse 6**
**CH-6330 Cham(CH)**

Patentinhaber: **Maiwald, Wolfgang**
**Dammstrasse 27**
**CH-8702 Zollikon(CH)**

(72) Erfinder: **Maiwald, Wolfgang**
**Dammstrasse 27**
**CH-8702 Zollikon(CH)**

(74) Vertreter: **Ouehl, Horst Max, Dipl.-Ing.**
**Patentanwalt Postfach 104 Ringstrasse 7**
**CH-8274 Tägerwilen(CH)**

EP 0 258 770 B1

# Beschreibung

Die Erfindung betrifft ein Möbelstück gemäss dem Oberbegriff des Patentanspruchs 1.

Ein Möbelstück mit einem entlang seiner Begrenzungskanten verlaufenden und durch Stangen gebildeten Traggestell ist beispielsweise bekannt durch die US-PS 2,806,755 oder die CH-PS 511 003. Gemäss der CH-PS 511 003 sind die zwischen die Stangen formschlüssig eingesetzten Begrenzungswände aus Blech geformt, so dass sie membranartig den Raum zwischen den Stangen ausfüllen. Die Verwendung von Blech hat jedoch den Nachteil, dass besondere Tragelemente zwischen die Stangen eingesetzt werden müssen, um in dem Möbelstück Einbauten tragen zu können, wie z.B. Schubläden, bzw. deren Führungsschienen. Die unmittelbare Befestigung solcher Einbauten an das Möbelstück aussen begrenzenden Blechwänden würde zu nicht akzeptierbaren Markierungen oder Verformungen dieser dekorativen Wände führen. Ein solches zwischen die Stangen des Möbelstückes einsetzbares Tragelement ist bekannt durch die CH-PS 594 166. Es besteht aus zwei gegenseitig verspannbaren U-Profilen, deren Montage relativ kompliziert und aufwendig ist.

Der Erfindung liegt die Aufgabe zugrunde, ein Möbelstück der genannten Art zu finden, dessen Tragelement oder Tragelemente bei einfachem Aufbau und leichter Montierbarkeit eine erhöhte Stabilität des Möbelstückes bewirken, um Einbauten sicher befestigen zu können. Die Lösung dieser Aufgabe erfolgt aufgrund der kennzeichnenden Merkmale des Patentanspruchs 1.

Besondere Ausführungsarten der Erfindung sind in den abhängigen Ansprüchen angegeben.

Im folgenden wird die Erfindung anhand von zeichnerisch dargestellten Ausführungsbeispielen näher erläutert. Es zeigt:

Fig.1 bis 3 je eine Ansicht der Innenseite einer in das Traggestell des Möbelstückes einsetzbaren Begrenzungswand mit eingesetztem Tragelement, entsprechend drei verschiedenen Ausführungsformen der Erfindung,

Fig.4 einen unterbrochenen Querschnitt entlang der Linie IV-IV der Fig.1 in natürlichem Massstab,

Fig.5 eine Aufsicht auf die verstellbare Eingriffsvorrichtung des Ausführungsbeispieles nach Fig.3 in natürlichem Massstab,

Fig.6 einen Querschnitt entlang der Linie VI-VI der Fig.5,

Fig.7 eine Aufsicht auf das Eingriffselement des Ausführungsbeispieles nach Fig.1 und

Fig.8 einen Querschnitt entlang der Linie IIX-IIX der Fig.7.

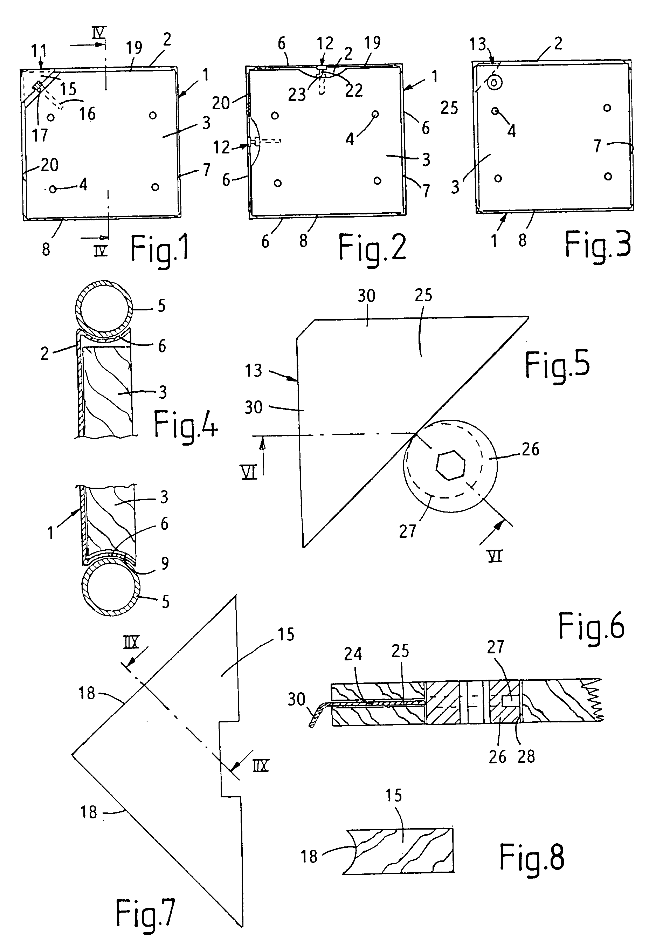

Die Fig.1 bis 3 zeigen eine Begrenzungswand 1, die aus einer membranartigen, verhältnismässig dünnen Aussenwand 2, z.B. aus Blech, und einem an deren Innenseite anliegenden, ein Tragelement bildenden plattenförmigen Körper 3 besteht, der z.B. durch eine Spanholzplatte gebildet ist. An diesem Tragelement 3 sind Befestigungsmittel, z.B. in Form von Gewindelöchern 4 vorgesehen, die der Befestigung von Einbauten, d.h. Führungsschienen für Schubläden o.dgl. dienen. Um in Spanholzplatten hierfür Gewindelöcher 4 zu schaffen, sind an den entsprechenden Stellen handelsübliche Gewindehülsen in die Spanholzplatten eingesetzt.

Die membranartige Aussenwand 2 hat entlang ihrer Aussenkanten flanschartig nach innen gerichtete und entsprechend der Umfangsform der Stangen 5 des Möbelstücks z.B. bogenförmig profilierte Ränder 6, so dass diese formschlüssig mit den als Rohr ausgeführten Stangen 5 in Eingriff stehen. Bei Verwendung von z.B. Sechskantrohren für die Stangen 5 hätten somit die Ränder 6 z.B. einen winkelförmigen Querschnitt, um eine Stange hinterfassen zu können.

Das erfindungswesentliche Tragelement 3 füllt entsprechend den drei Ausführungsbeispielen der Fig.1 bis 3 den Raum zwischen den Rändern 6 der Aussenwand 2 nahezu vollständig aus, so dass die Begrenzungswand 1 über ihre gesamte Oberfläche durch das plattenförmige Tragelement 3,z.B. gegenüber senkrecht auf die Begrenzungswand 1 einwirkenden Kräften verstärkt ist, obwohl das Tragelement 3 sich auch stegförmig zwischen nur zwei zueinander parallel verlaufenden Stangen 5 erstrekken könnte, um als Träger für Befestigungsmittel 4 zu dienen.

Die Befestigung eines Tragelementes 3 im nicht vollständig dargestellten Möbelstück erfolgt durch Eingriff mit den profilierten Rändern 6 der Aussenwand 2, die ihrerseits in der beschriebenen Weise mit den Stangen 5 in Eingriff stehen. Hierfür befindet sich an einer oder an zwei aneinandergrenzenden Begrenzungskanten 7,8 des plattenförmigen Tragelementes 3 eine Eingriffsnut 9, deren Querschnittsform derjenigen eines Randes 6 oder der entsprechenden Umfangsform einer Stange 5 angepasst ist, so dass die Eingriffsnut 9 diesen Rand 6 formschlüssig umfasst. Auf der dieser Begrenzungskante oder Eingriffsnut 9 gegenüberliegenden Seite des plattenförmigen Tragelementes befindet sich mindestens eine in Richtung der Wandebene relativ zu dem Tragelement 3 verstellbare Eingriffsvorrichtung 11, 12 oder 13, durch die nach dem Einsetzen des Tragelementes zwischen Rändern 6 der membranartigen Aussenwand ein Eingriff an einem profilierten Rand 6 herstellbar ist.

Gemäss dem Ausführungsbeispiel nach Fig.1,7 und 8 besteht die Eingriffsvorrichtung 11 aus einem winkelförmigen Eingriffskörper 15 und einer Schraube 16, die mittels einer auf ihren Gewindeschaft aufgeschraubten Schraubenmutter 17 zwischen diesem Eingriffskörper 15 und dem plattenförmigen Tragelement 3 eine Spreizkraft ausüben kann, um den Eingriffskörper 15 in den Eckbereich der Aussenwand 2 und damit gegen die Ränder 6 zu bewegen, so dass eine äussere Nut 18 mit diesen in Eingriff gelangt. Der Schaft der Schraube 16 ist in einer Bohrung des Tragelementes 3 gehalten. Die an die Eingriffsvorrichtung 11, 12 oder 13 angrenzenden Kanten 19,20 des Tragelementes, die somit den genuteten Kanten 7,8 gegenüberliegen, befinden sich in Abstand von den Rändern 6 der Aussenwand 2 und haben keine Nut, so dass das plattenförmige Tragelement 3 sich bei zurückgestellter Position der Eingriffsvorrichtung leicht gegen die Aussenwand 2 zwischen deren Ränder 6 einsetzen lässt.

Beim Ausführungsbeispiel nach Fig.2 sind zwei an je einer Begrenzungskante 19,20 des plattenförmigen Tragelementes 3 vorgesehene Eingriffsvorrichtungen 12 vorhanden, die aus einer Schraube 22 mit einer Stellmutter 23 bestehen. Der Schraubenschaft ist in einer Bohrung des Tragelementes 3 gehalten. Der Schraubenkopf hat an seiner dem Schraubenschaft abgekehrten Seite eine Eingriffsvertiefung, die den profilierten Rand 6 der Aussenwand 2 erfasst.

Das bevorzugte Ausführungsbeispiel nach Fig.3,5 und 6 hat eine in einem Schlitz 24 des plattenförmigen Tragelementes 3 geführte, z.B. aus Blech geformte dreieckförmige Eingriffsplatte 25, die durch einen kreiszylindrischen Verstellkörper 26 mit einer zu ihm exzentrischen Verstellnut 27 in Eingriff mit dem profilierten Rand 6 der Aussenwand 2 bewegbar ist. Der Verstellkörper 26 ist in eine Bohrung 28 des Tragelementes 3 eingesetzt, so dass er in ihr drehbar geführt ist. Für die Ausführung der die Eingriffsplatte 25 bewegenden Drehbewegung ist im Verstellkörper 26 eine Sechskantöffnung für den Eingriff eines Werkzeuges vorgesehen. Die Halterung des Verstellkörpers 26 in der Bohrung 28 ergibt sich durch den Eingriff der Eingriffsplatte 25 in der exzentrischen Verstellnut 27. Der Eingriffsrand 30 der Eingriffsplatte 25 ist abgewinkelt, so dass er mit tangentialer Anlage den Wandrand 6 der Aussenwand 2 hinterfassen kann.

## Patentansprüche

1. Möbelstück mit einem Traggestell, das aus mindestens entlang seiner Begrenzungskanten verlaufenden und an ihren Enden miteinander verbundenen Stangen (5) besteht und mit zwischen den Stangen (5) gehaltenen, membranartigen Begrenzungswänden (2), wobei an der Innenseite mindestens einer dieser Begrenzungswände (2) zwischen deren nach innen gerichteten Rändern (6) mindestens ein Tragelement (3) eingesetzt ist, das endseitig für den Eingriff mit diesen Rändern (6) ausgebildet ist, dadurch gekennzeichnet, dass das Tragelement (3) ein plattenförmiger Körper ist, der an mindestens einer seiner Begrenzungskanten (7,8) eine Eingriffsnut (9) aufweist, die in Eingriff mit einem der nach innen gerichteten Wandränder (6) steht und der sich in einem Stück bis in die Nähe eines diesem gegenüberliegenden Wandrandes (6) erstreckt, wobei eine verstellbare Eingriffsvorrichtung (11, 12,13) mit diesem gegenüberliegenden Wandrand (6) in Eingriff steht.

2. Möbelstück nach Anspruch 1, dadurch gekennzeichnet, dass das plattenförmige Tragelement (3) den Raum zwischen vier nach innen gerichteten Wandrändern (6) nahezu vollständig ausfüllt.

3. Möbelstück nach Anspruch 2, dadurch gekennzeichnet, dass zwei im rechten Winkel aneinandergrenzende Begrenzungskanten (7,8) des Tragelementes (3) die Eingriffsnut (9) aufweisen.

4. Möbelstück nach Anspruch 2 oder 3, dadurch gekennzeichnet, dass die verstellbare Eingriffsvorrichtung (11,13) in einem Eckbereich des plattenförmigen Tragelementes (3) vorgesehen ist.

5. Möbelstück nach Anspruch 1, dadurch gekennzeichnet, dass die Eingriffsvorrichtung (11,12) eine sich parallel zur Ebene des Tragelementes (3) erstreckende Schraube (16,22) mit einer Verstellmutter (17,23) aufweisen.

6. Möbelstück nach Anspruch 4 oder 5, dadurch gekennzeichnet, dass die Eingriffsvorrichtung (11) ein dreieckförmiges Eingriffsteil (15) mit entlang seiner Aussenränder verlaufenden Eingriffsnuten (18) aufweist.

7. Möbelstück nach einem der Ansprüche 1,4 oder 6, dadurch gekennzeichnet, dass die Eingriffsvorrichtung (13) ein in einem Schlitz (24) des Tragelementes (3) geführtes plattenförmiges Eingriffsteil (25) aufweist, an dessen einer Kante eine Exzenterfläche (27) eines verdrehbaren Verstellkörpers (26) anliegt.

8. Möbelstück nach Anspruch 7, dadurch gekennzeichnet, dass der Verstellkörper (26) eine kreiszylindrische Aussenfläche hat und in einer Bohrung (28) des Tragelementes (3) gelagert ist, wobei die Exzenterfläche in einer Nut (27) angeordnet ist, in die das plattenförmige Eingriffsteil (25) zumindest in einem Teil seines Verstellbereiches eingreift.

9. Möbelstück nach Anspruch 7 oder 8, dadurch gekennzeichnet, dass das Eingreiffsteil (25) einen abgewinkelten Eingriffsrand (30) hat.

## Claims

1. Piece of furniture with a supporting frame, which comprises rods (5) at least passing along its boundary edges and interconnected at their ends and with membrane-like boundary walls (2) secured between the rods (5), at least one support element (3) being inserted on the inside of at least one of the said boundary walls (2) between the inwardly directed edges (6) thereof and which is terminally constructed for engagement with the said edges (6), characterized in that the support element (3) is a plate-like body, which on at least one of its boundary edges (7, 8) has an engagement groove (9), which is in engagement with one of the inwardly directed wall edges (6) and whereof one portion extends into the vicinity of a wall edge (6) facing the same and an adjustable engaging device (11, 12, 13) is in engagement with said facing wall edge (6).

2. Piece of furniture according to claim 1, characterized in that the plate-like support element (3) almost completely fills the space between four inwardly directed wall edges (6).

3. Piece of furniture according to claim 2, characterized in that two boundary edges (7, 8) of the support element (3) adjacent at right angles to one another have the engagement groove (9).

4. Piece of furniture according to claims 2 or 3, characterized in that the adjustable engaging device (11, 13) is provided in a corner region of the plate-like support element (3).

5. Piece of furniture according to claim 1, characterized in that the engaging device (11, 12) has a screw (16, 22), with an adjusting nut (17, 23), extending parallel to the plane of the support element (3).

6. Piece of furniture according to claims 4 or 5, characterized in that the engaging device (11) has a triangular engaging part (15) with engaging grooves (18) running along its outer edges.

7. Piece of furniture according to one of the claims 1, 4 or 6, characterized in that the engaging device (13) has a plate-like engaging part (25) guided in a slot (24) of the support element (3) and on whose one edge engages an eccentric surface (27) of a rotatable adjusting body (26).

8. Piece of furniture according to claim 7, characterized in that the adjusting body (26) has a circular cylindrical outer face and is mounted in a bore (28) of the support element (3), the eccentric surface being located in a groove (27) in which the plate-like engaging part (25) engages, in at least one portion of its adjusting range.

9. Piece of furniture according to claims 7 or 8, characterized in that the engaging part (25) has an angular engaging edge (30).

## Revendications

1. Meuble avec une ossature constituée de barres (5) disposées le long de ses arêtes de délimitation et reliées par leurs extrémités et avec des parois de délimitation (2) en forme de membrane maintenues entre les barres, au moins un élément de support (3) étant mis en place à la face intérieure d'au moins l'une de ces parois de délimitation (2) entre les bords (6) dirigés vers l'intérieur de cette dernière, élément de support (3) qui à son extrémité est conçu pour l'engagement avec ces bords (6), meuble caractérisé par le fait que l'élément de support (3) est un corps ou organe en forme de plaque, qui présente le long d'au moins une de ses arêtes de délimitation (7, 8) une rainure d'engagement (9), rainure (9) qui est en engagement avec l'un des bords (5) de le paroi dirigés vers l'intérieur et qui s'étend en une pièce jusqu'à la proximité d'un bord (5) de paroi situé vis-à-vis du premier bord cité, un dispositif d'engagement réglable (11, 12, 13) étant en engagement avec ce bord (6) de paroi situé vis-à-vis.

2. Meuble suivant la revendication 1, caractérisé en ce que l'élément de support en forme de plaque (3) occupe sensiblement totalement l'espace compris entre quatre bords de paroi (6) orientés vers l'intérieur.

3. Meuble suivant la revendication 2, caractérisé par le fait que deux arêtes de délimitation limitrophes (7, 8) formant un angle droit de l'élément de support (3) présentent la rainure d'engagement (9).

4. Meuble suivant la revendication 2 ou 3, caractérisé en ce que le dispositif d'engagement réglable (11, 13) est prévu dans une région d'angle de l'élément de support (3) en forme de plaque.

5. Meuble suivant la revendication 1, caractérisé en ce que le dispositif d'engagement (11, 12) présente une vis (16, 22) disposée parallèlement au plan de l'élément de support (3), vis dotée d'un écrou de réglage (17, 23).

6. Meuble suivant la revendication 4 ou 5, caractérisé en ce que le dispositif de réglage (11) présente une pièce d'engagement triangulaire (15) avec des encoches d'engagement (18) disposées le long de ses bords extérieurs.

7. Meuble suivant l'une quelconque des revendications 1, 4 et 6, caractérisé en ce que le dispositif d'engagement (13) présente une pièce d'engagement (25) en forme de plaque guidée dans une fente (24) de l'élément de support (3), pièce d'engagement (25) contre une arête de laquelle est appliquée la surface excentrique (27) d'un organe de réglage rotatif (26).

8. Meuble suivant la revendication 7, caractérisé en ce que l'organe de réglage (26) a une surface extérieure en forme de cylindre circulaire et est monté dans une forure (28) de l'élément de support (3), la surface excentrique étant disposée dans une rainure (27) dans laquelle s'engage sur au moins une partie de sa gamme de réglage l'organe d'engagement (25) en forme de plaque.

9. Meuble suivant la revendication 7 ou 8, caractérisé en ce que la pièce d'engagement (25) présente un bord d'engagement coudé (30).

Fig.1

Fig.2

Fig.3

Fig.4

Fig.5

Fig.6

Fig.7

Fig.8